# NEW EUROPEAN PATENT SPECIFICATION

(11) **EP 0 415 459 B2**
(45) Date of publication and mention of the opposition decision: **17.03.1999**
(45) Mention of the grant of the patent: 13.04.1994
(21) Application number: 90116880.7
(22) Date of filing: 03.09.1990
(51) Int. Cl.: F16D 69/02

(54) **Friction material and method of manufacturing therefor**
Reibungsmaterial und Verfahren zur Herstellung desselben
Matériau de friction et procédé de fabrication

(30) Priority: 01.09.1989 JP 228153/89; 29.08.1990 JP 229091/90
(43) Date of publication of application: 06.03.1991
(73) Proprietor: SUMITOMO ELECTRIC INDUSTRIES, LTD., Osaka-shi, Osaka 541 (JP)
(72) Inventor: Nakagawa, Mitsuhiko, c/o Itami Works Sumitomo, Itami-shi, Hyogo (JP); Yamashita, Yukinori, c/o Itami Works Sumitomo, Itami-shi, Hyogo (JP); Kishimoto, Hiroya, c/o Itami Works Sumitomo, Itami-shi, Hyogo (JP); Masanori, Ibuki c/o Itami Works Sumitomo, Itami-shi, Hyogo (JP)
(74) Representative: Herrmann-Trentepohl, Werner, Dipl.-Ing.

(56) References cited:
- EP-A- 50 377
- EP-A- 184 708
- EP-A- 271 965
- EP-A- 0 000 839
- DE-A- 2 142 995
- DE-B- 2 366 046
- GB-A- 2 011 448
- US-A- 3 269 976
- US-A- 4 388 423
- US-A- 4 735 975
- DERWENT FILE SUPPLIER WPIL, Derwent Publications Ltd, London, GB

## Description

The present invention relates generally to friction materials and a method of manufacturing thereof, and particularly to friction materials for disk brakes, drum brakes and the like of vehicles such as tracks and automobiles and a method of manufacturing the same.

### Description of the Background Art

Conventionally, a material which uses asbestos as a main material is generally known as a friction material of brakes for tracks, automobiles and the like. However, there is a demand for friction materials not using asbestos from the viewpoint of safety and hygiene. Japanese Patent Laying-Open No. 54-34349, Japanese Patent Publication No. 64-4541, Japanese Patent Publication No. 57-37187 and Japanese Patent Publication No. 59-4459 disclose conventionally and generally known friction materials not using asbestos, of which description will be successively given in the following. Japanese Patent Laying-Open No. 54-34349 discloses the friction material obtained by forming a mixture formed of phenol-formaldehyde resin such as a steel fiber or a glass fiber and inorganic reinforcement other than asbestos, wherein mica is cited as one of the grain reinforcing materials.

Japanese Patent Publication No. 64-4541 discloses the use of mica as one of fillers for a friction material using glass fiber and fused liquid crystalline polyester as a main material in order to change properties of matter and reduce manufacturing cost.

Japanese Patent Publication No. 57-37187 discloses the friction material including fibered substance of 0-5 vol.%, mica of 20-60 vol.%, phenol resin of 5-30 vol.%. BaSO₄ of 5-30 vol.%, cashew dust of 5-15 vol.% and metal particle of 5-30 vol.%, describing that mica can replace asbestos as a main material.

As the foregoing, a large number of friction materials not using asbestos have been conventionally proposed. However, no main material has been developed that costs the same as asbestos and has characteristics of asbestos such as flexibility, strength, wearing resistance and softness to substitute for asbestos and consequently, a plurality of fibers are used together for the substitution of asbestos. However, most of the substitute fibers are thick and stiff and has such characteristics of covering other powder substances as asbestos has, so that separation and segregation might occur dependent on the treatment after mixing mica and other powder substances. Separation and segregation prevents formation of homogeneous mixture.

In addition, since power scaly form of such as mica which can be used effectively as the substitution of asbestos is liable to blow up, it is very difficult to form a homogeneous mixture. In addition, mica and the like unlikely mix with resin or the like used as a binder, so that they are difficult to bind with each other insufficiently, which might lower strength of a friction material or cause crack and expansion due to gas to occur during the formation and curing. The increased amount of resin as the binder for avoiding these problems allows heat resistance of the friction material to deteriorate, thereby furthering the expansion due to gas. Namely, it is difficult to uniform quality of mica or the like effectively used as the substitution of asbestos during the manufacturing.

Meanwhile, the conventional problem to be solved with respect to the characteristics required of a friction material for brakes is brake noise at the time of braking. Generally, a friction material containing large amount of solid lubricant such as graphite is well-known as a friction material which is unlikely to cause the brake noise in braking. However, if a large quantity of graphite or the like is used, a friction coefficient µ is decreased to lower braking force. Also effective for preventing brake noise in braking is a friction material containing a large quantity of organic filling materials such as rubber and cashew dust, which is disclosed in, for example, Japanese Patent Publication No. 59-4459. However, such friction material also allows decrease of friction coefficient µ at a high speed and high temperature to increase wearing. Namely, it is difficult to effectively prevent brake noise in braking without lowering braking force, which is a conventional problem.

US Patent 4388423 discloses a friction material using basically vermiculite but also some asbestos. The formulation of the brake lining comprises a non-fibrous natural or synthetic mineral or mineral-like material together with a small quantity of non-asbestos fibers and acicular mineral particles.

US Patent 4 735 975 discloses a friction material comprising a granular material and a thermoset binder resin, where the granular material has been produced by binding a powder material with a binder resin and curing.

Another composition of friction material is disclosed in European Patent 0000839. The material contains no asbestos but a thermoset binder including 20 - 60 % phenolformaldehyde resin and 10 to 35% of a fiber-based reinforcement consisting of a mixture of steel fibres or glass fibres with one or more other non-asbestos inorganic reinforcing materials.

### SUMMARY OF THE INVENTION

An object of the present invention is to provide a friction material allowing the problem of hygienic environment to be solved and brake noise at the time of braking to be effectively prevented while preventing reduction of braking force due to decrease of a friction coefficient.

Another object of the present invention is to provide a method of manufacturing a friction material by which the problem of hygienic environments can be solved and quality of the friction materials in manufacturing can be uniformed.

Briefly stated, according to one aspect of the present invention, a friction material of the invention is as defined in claim 1.

In operation, since the inorganic substances are scattered such that separation between layers of the crystals thereof occur approximately along the direction of the friction surface of the friction material, microseparation is liable to occur in the friction surface of the granule.

According to another aspect of the present invention, the method of manufacturing the friction material of the invention is as defined in claim 5.

In operation, since at least a part of the inorganic substances having the plane netlike crystal structure is granulated by the binder and the configuration of the granulation of the granule is deformed to be flat by both or either of pressure and heat during formation, inorganic block having the plane netlike crystal structure is formed, so that the environment for manufacturing the friction material can be uniformed and the inorganic substances having the plane netlike crystal structure are arranged such that separation between layers thereof occur in the direction along the friction of the friction material, whereby micro-separation is liable to occur in the friction surface.

The foregoing and other objects, features, aspects and advantages of the present invention will become more apparent from the following detailed description of the present invention when taken in conjunction with the accampanying drawings.

### BRIEF DESCRIPTION OF THE DRAWINGS

Fig. 1 is a graph showing brake noise occurence ratios of A-I brake pads manufactured based on Table 2.

Figure 2 is a graph showing, in addition to the brake noise occurence ratio of F-1 shown in Fig. 1, brake noise occurence ratios of F-3, F-4, F-5, F-6 and F-7 each singly equal in vol.% of mica and graphite measured under the same condition of measurement as that of F-1 in Fig. 1.

Fig. 3 is a graph showing friction coefficient I in a test conducted by using a dynamometer simulating a small sized car of 2000cc in accordance with an examination standard of JAS06914.

Fig. 4 is a process diagram explaining a method of manufacturing disc brake pads shown in Table 3.

### DESCRIPTION OF THE PREFERRED EMBODIMENTS

Table 1 shown in the following shows composition ratios of materials for disc brake pads according to one embodiment of the present invention. Table 2 shows 18 combinations (A, B, C1, C2, D1, D2, E, F1-7, G1, G2, H and I) of a particle diameter of graphite, a particle diameter of mica, a method of granulating graphite and mica, kinds and quantity of binder, kinds of solvent and the like.

**Table 1**

| Materials of Composition | Composition Ratios |
|---|---|
| kevlar (aramid pulp) | 10 vol.% |
| copper powder | 3 vol.% |
| glass fiber | 10 vol.% |
| cashew dust | 15 vol.% |
| molybdenum disulfide | 2 vol.% |
| phenol resin | 20 vol.% |
| graphite | Y vol.% |
| mica | X vol.% |
| calcium carbonate | residual quantity |
| subtotal | 100 vol.% |
| (Note) In using the formed granulated substance of graphite and mica, the amount of phenol resin equivalent to half the quantity of a binder (vol) used in the granulated substance is decreased. | |

The remaining half of the binder for granulation is not included in the above described 100 vol.%.

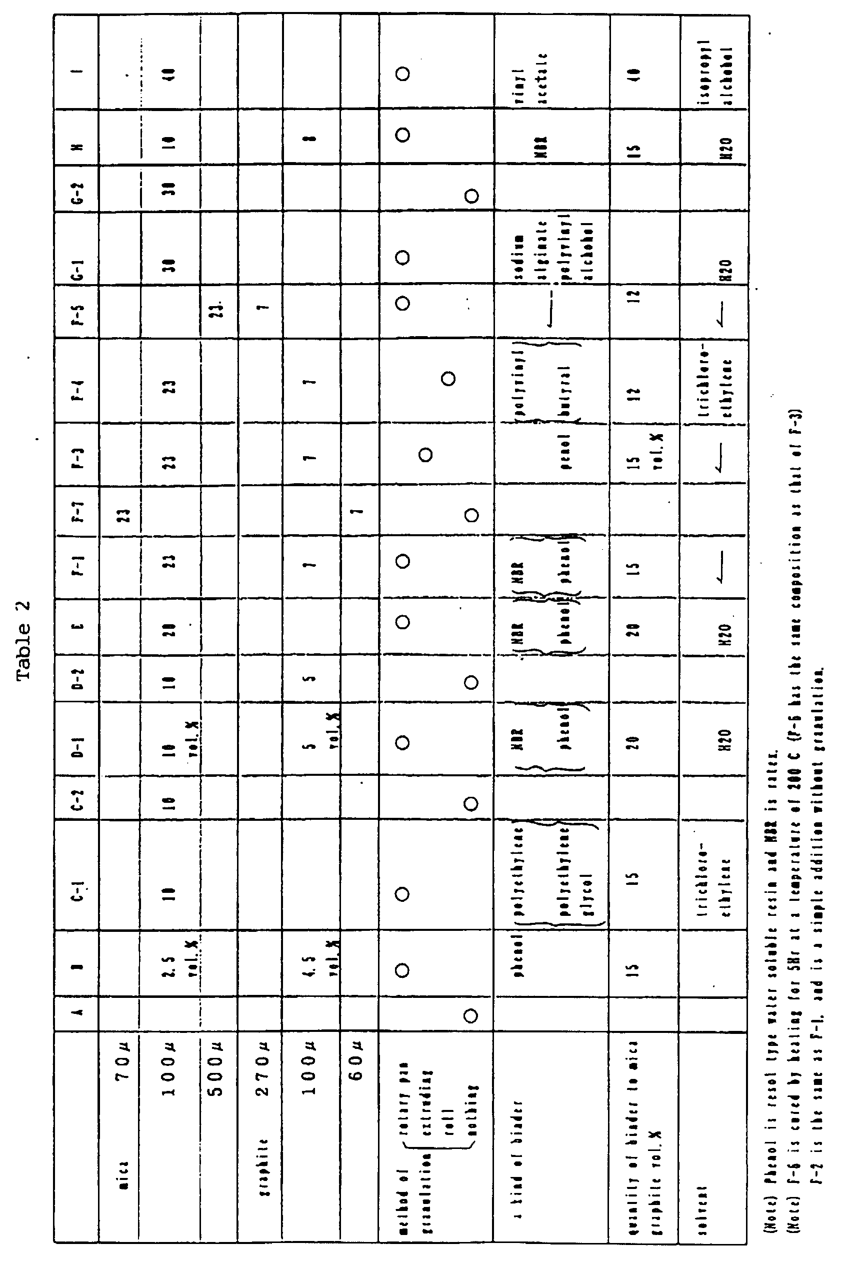

A is example for comparison which does not contain mica and graphite at all and is not granulated. The conditions of formation of the disc brake pad shown in Table 1 were as follows: The temperature for pressurization was
160°C, the time for pressurization was 10 minutes and the pressure was set so that the completed pad may have a porosity of 10%. After the thermal formation, the disc brake pad was heated in a furnace of 220°C for 10 hours to complete the curing and thereafter which was abraded to have a prescribed thickness.

Referring to Table 2, the graphite used herein was natural graphite of scaly-form made in Sri Lanka and mica was phlogopite produced in Canada, both of which were inorganic substances having plane netlike crystal structure. The inorganic substances having the plane netlike crystal structure are substances having a crystal structure in which radicals of SiO₄, polymeric acid radicals of SiO₄, and copolymeric acid radicals of SiO₄ and AℓO₄ as main components, and silicic acid radicals having positive ions bound thereto are developed in a two-dimensional plane netlike manner. A more detailed explanation thereof is given in Ceramics Handbook edited by Association of Ceramics, pp. 11-18. These substances have crystals developed in plane layers, and a slip phenomenon occurs in the layers because those layers are bound by a weak Van der Waals force.

The inorganic substances having the plane netlike crystal structure include talc, vermiculite, aluminum hydroxide, magnesium hydroxide, agalmatolite, kaolin, chlorite, sericite, iron hydroxide and montmorillonite etc. in addition to mica and graphite. Particle diameters of mica were 70 µm, 100 µm and 500 µm and those of graphite were 60 µm, 100 µm and 270 µm. The methods of granulation were the method by using a granulator with a rotary pan, the method using a two shaft extruder utilizing a slit having an inside diameter of 1 mm and the method of compressing a kneaded substance between two separate molds into a sheet of 0.5 mm by a roll. In Table 2, F-3 and F-6 were granulated by the method using the two shaft extruder and F-4 was granulated by the compression method by using a roll, wherein F-6 was grained after the heating at 200°C for 5 hours and the others mere dried at a temperature below the boiling point of the solvent. The granulated substance having an average particle diameter of 300 µm can be obtained by classification and grinding. Excepting F-6, granulated substances of the abraded surfaces of the disc brake pads containing the granulated substances were extended by 10 % or more and those of C-1, D, E, H and I were extended by 30 % or more.

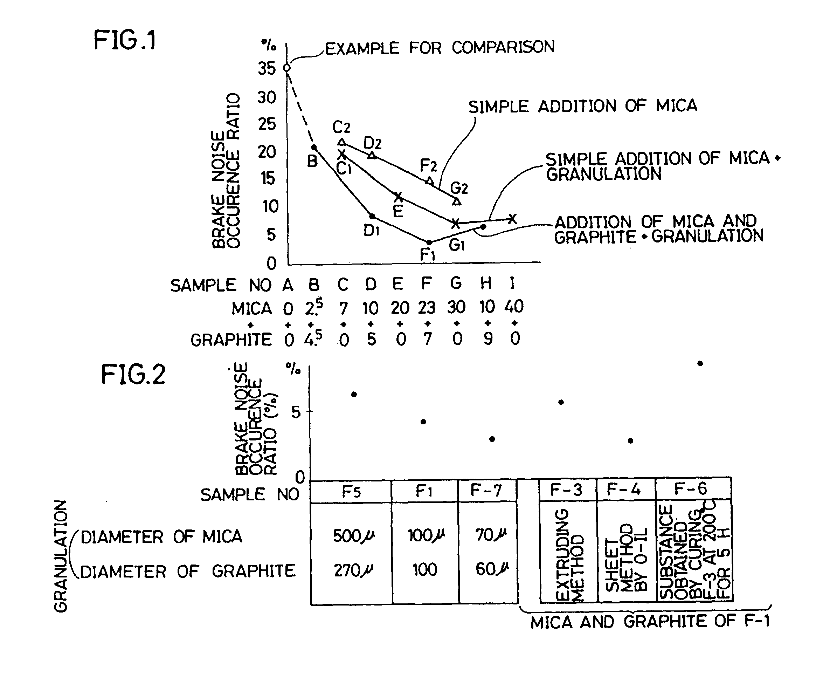

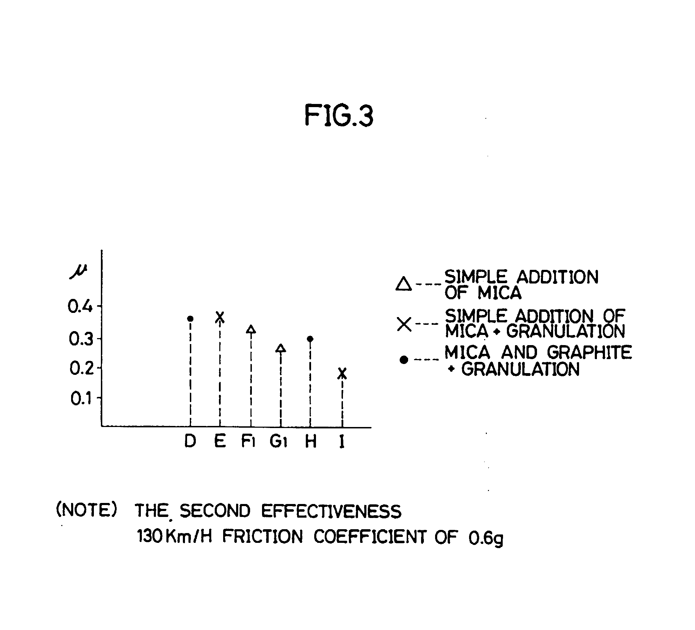

Fig. 1 is the graph showing brake noise occurrence ratios of brake pads A-I manufactured based on Table 2. The measurement of the brake noise occurrence ratios was carried out with respect to the A-H brake pads attached to small-sized cars of 2000 cc running at a speed of 40 Km/h, with the temperature of the pad before braking changed from 40°C to 260°C and from 260°C to 60°C as one cycle and deceleration at each temperature of each cycle graded into 10 by 0.05g in the range of 0.05 to 0.5g. In total, the measurement of the brake noise occurrence ratios was carried out at 2200 stops in 10 cycles.

Fig. 2 is the graph showing, in addition to the brake noise occurence ratio of F-1 shown in Fig. 1, the brake noise occurrence ratios measured under the same conditions as those of Fig. 1 with respect to F-3, F-4, F-5, F-6, and F-7 each singly equal in vol. % of mica and graphite to that of F-1.

Fig. 3 is the graph showing friction coefficients µ of disc pads in the test carried out by using a dynamometer sumilating a small-sized car of 2000cc in accordance with the examination standard of JASO 6914, wherein the second resistance was 130 Km/h and the deceleration was 0.6g. The applied moment of inertia was 6.0 Kg m S⁻² and brake discs having a thickness of 22mm and an outer diameter of 250mm were utilized.

Referring to Figs. 1, 2 and 3, the test results will be described. First, it can be seen from Figs. 1 and 3 that B including a small quantity of mica had the high brake noise occurrence ratio. Conversely, (I) including a large quantity of mica had the lower brake noise occurrence ratio as compared with B. It can be also seen that D and F including both mica and graphite had still lower brake noise occurrence ratios than that of (I) and friction coefficients µ thereof were larger than that of I. It can be seen from Fig. 2 that F-6 thermally cured by the thermo-setting resin had the highest brake noise occurrence ratio and F-3 not thermally cured had a lower ratio. Furthermore, the brake noise occurrence ratio of F-4 manufactured by the granulation method of compressing by using the roll had a lower brake noise occurrence ratio than that of F-3. It can be also seen that F-7 including mica and graphite having small particle diameters had the brake noise occurrence ratio as low as that of F-3.

Consideration of the above-described results of the test will be made in following.

Mica having a smaller particle diameter would more effectively prevent the brake noise than that having a larger particle diameter does when the same volume thereof easy used. The brake noise could be more effectively prevented by dotted blocks of mica having a small particle diameter than by the uniformly scattered mica in the friction material. However, the block formed of a compound material cured by using the thermosetting resin as the binder and then grinded by the conventionally proposed method only to lowers the prevention effect of the brake noise. This is because mica of plate.scaly form is longitudinally, laterally and diagonally arranged at random in the friction material. Therefore, mica needs to be arranged approximately in parallel in the friction surface in order to improve the brake noise preventing effect. The reason why the brake noise can be more effectively prevented by the parallel-arranged mica on the friction surface having the smaller particle diameter is that micro separation of the mica occurs due to frictional resistance resulted from the contact of the braking pad with the disc at the time of braking to suppress stick slip phenomenon.

In addition, particle diameters of graphite and the mica are preferably 300µm or more, more preferably 200µm or more, and still more preferably 150µm or more.

Some of the flattened mica or mica and graphite in the friction surface preferably has a particle diameter of not less than 500µm.

Binder can be made of adhesive agent such as molasses, sodium alguinate, latex, polyvinyl alcohol celluloses, gelatin, pitch and lignin, thermoplastic resin and thermosetting resin which is not completely cured. Such binder may be used singly. However, it is preferable to use the binder together with adhesive agent and resin in order to facilitate granulation of mica and graphite which do not mix together easily. At this time, thermoplastic resin is preferable to make fluidity of a granulated substance larger at the time of formation thereof. The binder is not limited to an organic substance but it may be an inorganic substance such as sodium silicate and sodium polyphosphorate.

The ratio of volume of the quantity of the binder to a non-granulated substance is preferably 0.02:1 to 1.0:1, more preferably 0.04:1 to 0.5:1 and desirably 0.06:1 to 0.35:1. Insufficient binder results in insufficient granulation, whereby dust is liable to be generated and a large quantity of binder in a friction material deteriorates friction effect.

Granulation was carried out by using a banbury mixer, a rubber roll for kneading, pressure kneader and an extruder to obtain a block by either heat or pressure or both of them. Thereafter, the block was dried and grinded as necessary. In order to make the fluidity larger during the formation, a grinder with a rotary pan is referable by which granulated substances having a small apparent density can be obtained without applying pressure. A spray dryer may be utilized dependent of a particle diameter of mica and graphite. In addition, the method of compressing the block into a thin seat by a roll exceptionally allows mica and graphite to be arranged in one direction, which effectively prevents brake noise.

The inorganic substances having the plane netlike crystal structure include talc, vermiculite, aluminum hydroxide, magnesium hydroxide, agalmatolite, kaolin, chlorite, sericite, iron hydroxide, montmorillonite, etc. other than mica, granulation of which and graphite can produce the same effect.

Table 3 shown in the following shows composition ratios of the materials for disc brake pads using inorganic substances having the plane netlike crystal structure other than mica according to the second embodiment of the present invention. Table 4 shows brake noise occurrence ratios of the disc brake pads shown in Table 3 in the brake noise test conducted under the same conditions of measurement as that shown in Fig. 1.

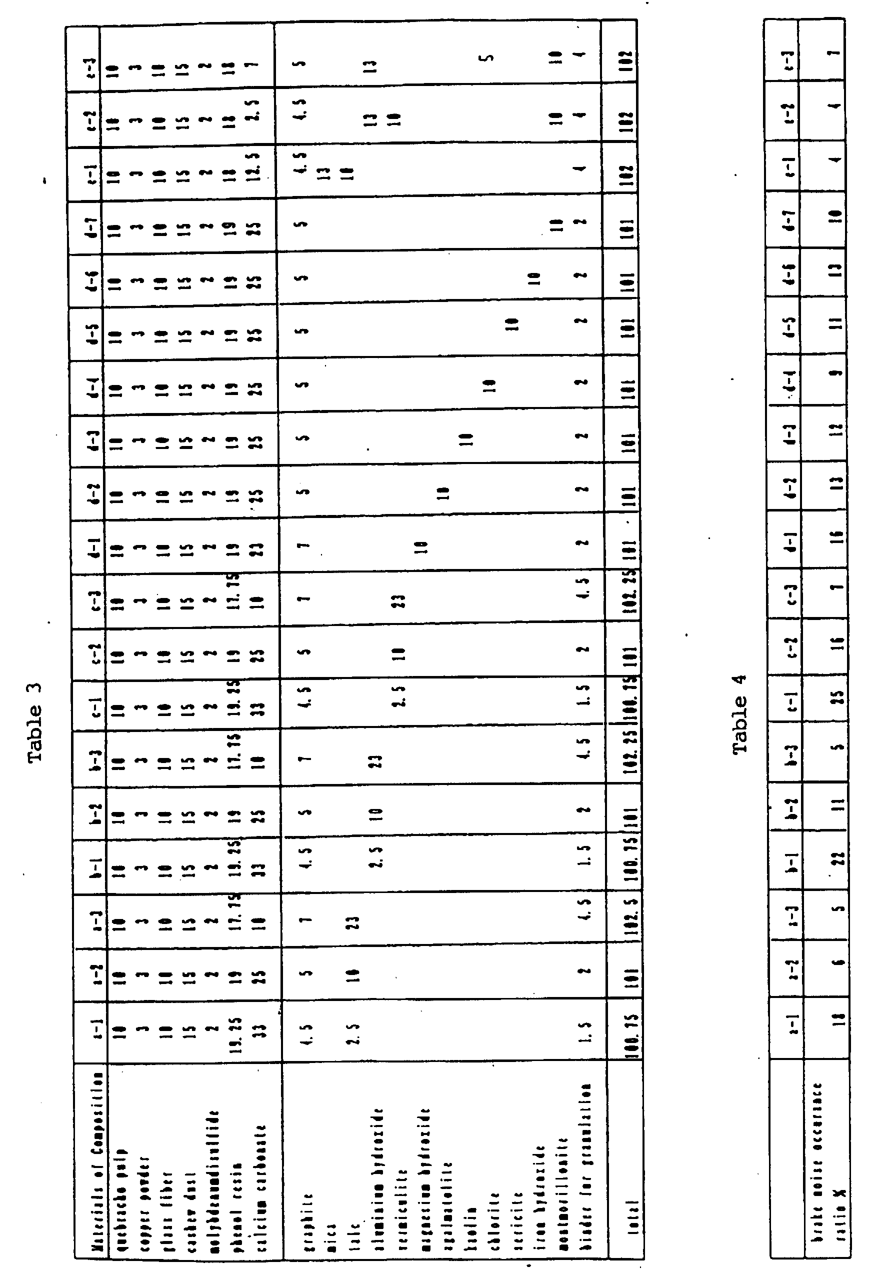

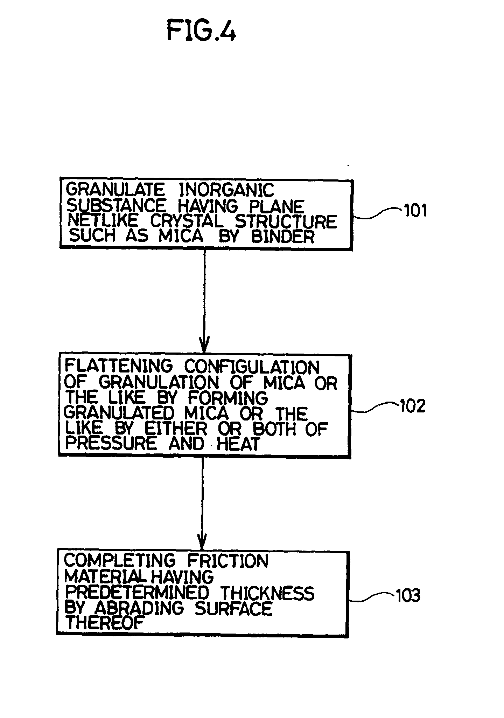

Fig. 4 is the process diagram explaining the method of manufacturing the disc brake pads shown in Table 3. With reference to Fig. 4, the method of manufacturing the disc brake pads shown in Table 3 will be described. First, as shown in step 101, granulation materials shown in Table 3 are granulated by the granulator with a rotary pan. Sodium alguinate and polyvinyl alcohol are used as binder and water is used as diluent. As shown in step 102, the conditions of forming the disc brake pads shown in Table 3 are the same as those shown in Table 1. The temperature for pressurization is 160°C, the time for pressurization is 10 mins. and the pressure is set such that the completed pad may have a polosity of 10%. After the thermoformation, the pad is heated in a furnace of 220°C for 10 hours to complete curing. Thereafter as shown in step 103, the pad is abraded to have a prescribed thickness. Referring to Tables 3 and 4, similar to mica, talc, aluminum hydroxide, vermiculite, magnesium hydroxide, agalmatolite, kaolin, chlorite, sericite, iron hydroxide and montmorillonite effectively lower a brake noise occurrence ratio of a brake pad. A quantity in volume thereof is preferably not larger than half the total quantity of the substance of the plane netlike crystal structure and more preferably not more than 1/5. The quantity of graphite is not larger than 2.0 vol. at maximum with respect to the substance of the plane netlike crystal structure of 1.0 vol., preferably not larger than 1.5 vol. and more preferably not larger than 1.0 vol. While the increased quantity of graphite more effectively prevents brake noise, it decreases a friction coefficient µ.

As the foregoing, in the present embodiment, one or more than one of mica, vermiculite, graphite, talc, magnesium hydroxide, agalmatolite, kaolin, chlorite, sericite, iron hydroxide and montmorillonite are granulated by an organic/inorganic binder to form a block which is used as a part of a friction material. Then, the binder for granulation can be softened and fluidized by heat or both heat and pressure in forming a friction material and the configuration of thus formed granulated substance is extended flat, differently from the original configuration. By using such binder, inorganic blocks of the plane netlike crystal structure such as mica are scattered in the surface of the friction material to be arranged along the direction of the friction and consequently, microseparation is liable to occur to effectively reduce brake noise of the brake. As a result of researches on materials effectively reducing brake noise of brakes, it was found that inorganic substances of the plane netlike crystal structure such as mica, vermiculite, aluminum hydroxide and magnesium hydroxide are effective and a better effect can be obtained by using the same together with the graphite. It is appropriate that a quantity of a granulated substance to be contained is in the range of 1-35 vol.% of the total quantity, preferably in the range of 3-30 vol.% and more preferably in the range of 5-25 vol.%. In this case, if the quantity of granulated substance is small, the brake noise can not be effectively prevented and conversely, if the quantity is too large, the friction coefficient µ at a high speed is decreased. Not granulated mica, graphite and the like may be used together with this granulated substance.

In the method of manufacturing the disc brake pads shown in Fig. 4, since the inorganic substance such as mica having the plane netlike crystal structure is granulated by the binder, which is formed without being cured, so that the configuration of the granulation of mica or the like is made flat, micro-separation is liable to occur in the friction surface of the disc brake pad. As a result, brake noise in braking can be reduced. In addition, a block such as mica formed by granulation results in a heavy substance, so that such problem in manufacturing as blowing-up of mica or the like can be effectively improved. Furthermore, since the number of particles is reduced by granulation, it is possible to effectively prevent separation, segregation and decrease of the strength of the friction material due to insufficient mixture of a binder and mica or the like, which is the problem in using conventional fiber as a main material.

As the foregoing, the friction material according to the present invention resolved the problem in hygienic environment and effectively prevented brake noise at the time of braking while preventing reduction of braking force, as possible as it could, resulted from decrease of a friction coefficient which is fatal disadvantage in a friction material.

In the method of manufacturing a friction material according to the present invention, it was possible to resolve the problem on hygienic environment and uniform quality in manufacturing, and brake noise in braking could be effectively prevented while preventing reduction of braking force, as possible as it could, resulted from decrease of a friction coefficient which is fatal disadvantage in a friction material.

## Claims

1. A friction material formed of thermosetting resin including a fibered substance as a main material and granules adjusting friction and wearing, said granules comprising inorganic substances having a plane netlike crystal structure, characterized in that said granules consist of said inorganic substances and a binder and are scattered in the friction material such that the crystal layers are arranged approximately in parallel to the friction surface and separation between layers of crystals of said inorganic substance occurs approximately along the direction of the surface of the friction material.

2. The friction material according to claim 1, wherein said scattered inorganic substances having the plane netlike crystal structure comprises a compound material at least a part of which is granulated by a binder and granulated such that a configuration of granulation of said granulated inorganic substances is deformed to be flat by both or either of pressure and heat during the formation.

3. The friction material according claim 1 and claim 2, wherein said inorganic substance having the plane netlike crystal structure comprises one or more than one substances selected among mica, talc, vermiculite, aluminum hydroxide, magnesium hydroxide, agalmatolite, kaolin, chlorite, sericite, iron hydroxide, montmorillonite, or the selected substances containing graphite.

4. The friction material according to claim 2, wherein said granulated inorganic substance comprises an inorganic substance made by drying and grinding a block formed by granulation.

5. A method of manufacturing a friction material formed of thermosetting resin including a fibered substance as a main material and granules adjusting friction and wearing, said granules consisting of an inorganic substance having a plane netlike crystal structure and a binder, and said method of manufacturing a friction material comprising the steps of:
granulating by a binder of at least a part of said inorganic substance without curing for forming said granules consisting of said inorganic substance and a binder
deforming the configuration of the granulation of said granules to be flat by both or either of pressure and heat during formation of said friction material from said thermosetting resin, said fibered substance and said granules
curing the friction material, and
abrading the friction material including said granules the configuration of granulation of which is flattened by formation to have a prescribed thickness.

6. The method of manufacturing a friction material according to claim 5, wherein said granulating step comprises drying and grinding said granulated granule by a binder.

## Patentansprüche

1. Reibungsmaterial, gebildet aus warmaushärtendem Harz mit einem Faserstoff als Hauptbestandteil und einem Granulat, das die Reibung und den Verschleiß reguliert, wobei das Granulat anorganische Stoffe mit einer ebenen netzartigen Kristallstruktur umfaßt, dadurch gekennzeichnet, daß das Granulat aus den anorganischen Stoffen und einem Binder besteht und daß es in dem Reibungsmaterial so eingestreut ist, daß die Kristallschichten nahezu parallel zur Reiboberfläche angeordnet sind und die Trennung zwischen den Kristallschichten der anorganischen Stoffe ungefähr entlang der Richtung der Oberfläche des Reibungsmaterials auftritt.

2. Reibungsmaterial nach Anspruch 1, wobei die eingestreuten anorganischen Stoffe mit der ebenen netzartigen Kristallstruktur einen Verbundstoff aufweisen, von dem zumindest ein Teil durch ein Bindemittel granuliert wird, und zwar so, daß eine Granulierungs-Anordnung der granulierten anorganischen Stoffe während der Bildung entweder durch Druck oder Wärme oder durch beides flachgeformt wird.

3. Reibungsmaterial nach den Ansprüchen 1 und 2, wobei der anorganische Stoff mit der ebenen netzartigen Kristallstruktur einen oder mehrere der Stoffe Glimmer, Talk, Vermiculit, Aluminiumhydroxid, Magnesiumhydroxid, Agalmatolit, Kaolin, Chlorit, Sericit, Eisenhydroxid, Montmorillonit aufweist, oder die gewählten Stoffe Graphit enthalten.

4. Reibungsmaterial nach Anspruch 2, wobei der granulierte anorganische Stoff einen anorganischen Stoff aufweist, der durch Trocknen und Mahlen eines durch Granulieren gebildeten Blockes hergestellt wird.

5. Verfahren zur Herstellung eines Reibungsmaterials aus warmaushärtendem Harz mit einem Faserstoff als Hauptwerkstoff und einem Granulat, das die Reibung und den Verschleiß reguliert, wobei das Granulat aus einem anorganischen Stoff mit einer ebenen netzartigen Kristallstruktur und einem Binder besteht und wobei das Verfahren zur Herstellung eines Reibungsmaterials folgende Schritte aufweist:
Granulieren durch einen Binder von zumindest einem Teil des anorganischen Stoffes ohne Aushärten, um das Granulat zu bilden, das aus dem anorganischen Stoff und einem Binder besteht,
Flachformen der Granulierungs-Anordnung des Granulats durch Druck oder Hitze oder beides während der Bildung des Reibungsmaterials aus dem warmaushärtendem Harz, dem Faserstoff und dem Granulat, Aushärten des Reibungsmaterials, und
Abschleifen des Reibungsmaterials einschließlich des Granulats, dessen Granulierungs-Anordnung durch Formung flachgemacht wird, um eine vorgeschriebene Dicke aufzuweisen.

6. Verfahren zur Herstellung eines Reibungsmaterials nach Anspruch 5, wobei der Granulierungsschritt Trocknen und Mahlen des durch ein Bindemittel granulierten Granulats beinhaltet.

## Revendications

1. Matériau de friction constitué par une résine thermodurcissable comprenant une substance en fibres comme matériau principal et des granules ajustant la friction et l'usure, les granules comprenant des substances minérales avec une structure cristalline réticulaire plane, caractérisé en ce que les granules consistent en des substances minérales et en un liant et sont dispersés dans le matériau de friction de telle sorte que les couches cristallines sont disposées approximativement parallèlement à la surface de friction et la séparation entre les couches de cristaux de la substance minérale se produit approximativement le long de la direction de la surface du matériau de friction.

2. Matériau de friction selon la revendication 1, dans lequel les substances inorganiques dispersées ayant la structure cristalline réticulaire plane comprennent un matériau composé dont au moins une partie est granulée par un liant et granulée de telle sorte que la configuration de granulation de ces substances inorganiques granulées peut se déformer de façon à s'aplatir sous l'effet combiné ou unique de la pression et de la chaleur pendant la formation.

3. Matériau de friction selon la revendication 1 et la revendication 2, dans lequel la substance inorganique ayant la structure cristalline réticulaire plane comprend une ou plus d'une substance choisie parmi le mica, le talc, la vermiculite, l'hydroxyde d'aluminium, l'hydroxyde de magnésium, l'agalmatolite, le kaolin, la chlorite, la séricite, l'hydroxyde de fer, la montmorillonite ou les substances sélectionnées contenant du graphite.

4. Matériau de friction selon la revendication 2, dans lequel la substance inorganique granulée comprend une substance inorganique réalisée par séchage et broyage d'un bloc formé par granulation.

5. Procédé pour la fabrication d'un matériau de friction constitué d'une résine thermodurcissable comprenant une substance en fibres comme matériau principal et des granules ajustant la friction et l'usure, les granules consistant en une substance minérale ayant une structure cristalline réticulaire plane et en un liant, et le procédé de fabrication du matériau de friction comprenant les étapes consistant à :
granuler par un liant au moins une partie de la substance minérale sans durcir pour former les granules constitués par la substance organique et le liant
déformer la configuration de la granulation des granules de façon à les rendre plates par pression et/ou par chauffage pendant la formation du matériau de friction à partir de la résine thermodurcissable, la substance en fibres et les granules
en durcissant le matériau de friction et
en abrasant le matériau de friction y compris les granules dont la configuration est aplatie par formation pour avoir une épaisseur prescrite.

6. Procédé de fabrication d'un matériau de friction selon la revendication 5, dans lequel l'étape de granulation comprend le séchage et le broyage des granules granulés par liant.
